# EUROPÄISCHE PATENTSCHRIFT

(11) **EP 3 083 506 B1**
(45) Veröffentlichungstag und Bekanntmachung des Hinweises auf die Patenterteilung: **28.08.2019**
(21) Anmeldenummer: 14809752.0
(22) Anmeldetag: 21.10.2014
(51) Int. Cl.: C02F 3/00, C02F 3/12

(54) **VORRICHTUNG ZUR BEHANDLUNG VON ABWASSER**
APPARATUS FOR TREATING WASTEWATER
DISPOSITIF DE TRAITEMENT D'EAUX USÉES

(30) Priorität: 21.11.2013 DE 202013010447 U
(43) Veröffentlichungstag der Anmeldung: 26.10.2016
(73) Patentinhaber: ZWT Wasser- und Abwassertechnik GmbH, 95448 Bayreuth (DE)
(72) Erfinder: REICHENBERGER, Josef, 95448 Bayreuth (DE)
(74) Vertreter: Weihrauch, Frank
(86) Internationale Anmeldenummer: PCT/DE2014/000528
(87) Internationale Veröffentlichungsnummer: WO 2015/074636

(56) Entgegenhaltungen:
- EP-A1- 0 851 844
- EP-A1- 1 903 010
- EP-A1- 2 289 855
- EP-A2- 0 749 942
- EP-A2- 0 834 474
- EP-A2- 1 072 559
- DE-T2- 60 209 695

## Beschreibung

Die Erfindung betrifft eine Vorrichtung zur Behandlung von Abwasser, insbesondere als zyklisch betriebene Abwasserbehandlungsanlage.

Zyklisch betriebene Abwasserbehandlungsanlagen, insbesondere als SBR-Anlagen sind als solche aus dem Stand der Technik bekannt. Hierbei handelt es sich um eine Variante des Belebtschlammverfahrens, bei welcher zu reinigendes Abwasser aus einem Vorbehandlungsbecken diskontinuierlich in einen sogenannten Reaktorraum eingebracht und in diesem unter Luftzufuhr gereinigt wird. Nach der Reinigung setzt sich der Belebtschlamm aus dem behandelten Abwasser auf dem Grund des Reaktorraums ab und das gereinigte Abwasser wird als Klarwasser von der Oberfläche abgezogen.

Der Nachteil herkömmlicher SBR-Anlagen besteht insbesondere darin, dass nach der Behandlung des Abwassers jeweils die Zeitdauer abgewartet werden muss, welche der Belebtschlamm zur Sedimentation benötigt. Somit ist die Effektivität derartiger SBR-Anlagen vergleichsweise begrenzt.

Zur Bereitstellung einer effektiveren SBR-Anlage ist beispielsweise aus der Druckschrift DE 10 2009 039 316 A1 eine Abwasserreinigungsanlage bekannt, welche ein Einlaufmischbecken und ein Reaktions- und Sedimentationsbecken aufweist.

Über entsprechende Verbindungsstellen wird hierbei das zu reinigende Abwasser aus dem Einlaufmischbecken in das Reaktions- und Sedimentationsbecken eingeleitet, wobei das Reaktions- und Sedimentationsbecken vorliegend mehrere Abschnitte aufweist.

Je nach Einleitungsrichtung des zu reinigenden Abwassers kann mit dieser Lösung jeweils ein Abschnitt des Reaktions- und Sedimentationsbeckens als Reaktionsabschnitt betrieben werden, während zeitlich ein anderer Abschnitt als Sedimentationsabschnitt betrieben wird, wobei aus dem Sedimentationsabschnitt unter anderem das gereinigte Abwasser als Klarwasser abgezogen wird. Auf diese Weise wird es ermöglicht, dass für die Dauer der Sedimentation der jeweilige Reaktionsabschnitt mit zu reinigendem Abwasser beschickt werden kann. Nach Abzug des Klarwassers wird die Einleitungsrichtung des zu reinigenden Abwassers angepasst, sodass der bis dahin als Reaktionsabschnitt fungierende Abschnitt nun seinerseits als Sedimentationsabschnitt wirken kann.

Der Nachteil derartiger Abwasserbehandlungsanlagen besteht jedoch insbesondere in einer aufwändigen Steuerung der Klarwasserabzugsphase und der damit verbundenen Ablaufeinrichtungen.

EP 2 289 855 A1 beschreibt ebenfalls eine Abwasserreinigungsanlage mit mehreren Becken, welche strömungstechnisch verbunden sind. Nachteilig ist insbesondere, dass für die bestimmungsgemäße Funktion mindestens zwei aktive Fördereinrichtungen wie Pumpen erforderlich sind.

Die Aufgabe der vorliegenden Erfindung ist es, eine Vorrichtung zur Behandlung von Abwasser bereitzustellen, welche sowohl eine hohe Effizienz als auch ein unkompliziertes, kostengünstiges und betriebssicheres Abziehen des gereinigten Abwassers als Klarwasser ermöglicht.

Zudem ist es Aufgabe der Erfindung, eine Regulierungseinheit zur Regulierung des Klarwasserabzuges einer solchen Vorrichtung zur Behandlung von Abwasser bereitzustellen.

Die Aufgabe wird In Bezug auf die Vorrichtung zur Behandlung von Abwasser durch die im Patentanspruch 1 aufgeführten Merkmale gelöst. Bevorzugte Weiterbildungen ergeben sich aus den Unteransprüchen.

Die beiden Behandlungsbecken sind zu kommunizierenden Gefäßen verbunden, so dass sich ein gleicher Wasserspiegel einstellt. Die Verbindung zu kommunizierenden Gefäßen kann dabei in allen denkbaren Varianten erfolgen, beispielsweise über eine direkte Verbindung, welche unterhalb des Wasserspiegels oder auch auf Höhe des Wasserspiegels vorhanden sein kann, über eine mittelbare Verbindung über optionale weitere Behandlungsbecken, vorzugsweise jedoch bereits über eine entsprechende Ausbildung des Einlaufs oder ein vorgeschaltetes Becken.

Die erfindungsgemäße Vorrichtung weist weiterhin einen ersten und einen zweiten Ablauf auf, wobei der erste Ablauf dem ersten Behandlungsbecken und der zweite Ablauf dem zweiten Behandlungsbecken zugeordnet sind und wobei die Abläufe jeweils zum Abführen des gereinigten Abwassers, im Folgenden auch als Klarwasser bezeichnet, dienen. Zu diesem Zweck sind die Abläufe unterhalb des sich einstellenden Wasserspiegels oder in Höhe des sich einstellenden Wasserspiegels angeordnet. Wird beispielsweise der erste Ablauf geöffnet und der zweite Ablauf geschlossen, wird durch den prinzipbedingten gleichen Wasserspiegel das über den Einlauf eingeleitete Abwasser ausschließlich durch das erste Behandlungsbecken geführt, während das zweite Behandlungsbecken ruht und umgekehrt. Auf diese Weise ist ein zyklischer und zugleich zwischen den Behandungsbecken alternierender Betrieb möglich. Die Betriebszustände können zudem ohne Regulierung des Einlaufs mittels der Öffnungs- und Schließzustände der Abläufe gesteuert werden.

Die erfindungsgemäße Vorrichtung zur Behandlung von Abwasser zeichnet sich dadurch aus, dass diese eine Regulierungseinheit, zum Regulieren des Klarwasserabzugs über den jeweiligen Ablauf, aufweist.

Die Regulierungseinheit besteht im Wesentlichen aus einem ersten Verschlussmittel, einem zweiten Verschlussmittel, einer Antriebseinheit sowie einem mechanischen Verbindungsmittel.

Durch das mechanische Verbindungsmittel sind erfindungsgemäß das erste Verschlussmittel und das zweite Verschlussmittel mechanisch miteinander verbunden.

Zudem sind das erste Verschlussmittel dem ersten Ablauf und das zweite Verschlussmittel dem zweiten Ablauf der Vorrichtung zugeordnet.

Die mechanische Verbindung der Verschlussmittel ist erfindungsgemäß derart ausgebildet, dass bei einer Öffnungsstellung des ersten Verschlussmittels das zweite Verschlussmittel eine Schließstellung einnimmt und dass umgekehrt bei einer Öffnungsstellung des zweiten Verschlussmittels das erste Verschlussmittel eine Schließstellung einnimmt.

Je nach Anforderung an die Vorrichtung kann die mechanische Verbindung beispielsweise als bewegliches oder starres Gestänge oder als Zahnstangengruppe ausgeführt sein.

Die jeweilige Offnungs- und Schließstellung beider Verschlussmittel ist erfindungsgemäß durch die Antriebseinheit herbeiführbar, wobei die Antriebseinheit beispielsweise als elektrischer Stellmotor oder als manuell zu bedienende Einheit ausgebildet ist.

Der besondere Vorteil der erfindungsgemäßen Vorrichtung besteht in der Einfachheit der Regulierungseinheit, durch welche, aufgrund der bereitgestellten Abhängigkeit der Verschlussmittel voneinander, je nach Betriebszustand der Vorrichtung das korrekte Öffnen oder Schließen des jeweiligen Behandlungsbeckens sicherstellbar ist.

Es kann somit vorliegend auf eine aufwändige Steuerung und Überwachung der korrekten öffnungs- und Schließpositionen der Klarwasserabläufe während des Betriebs der Vorrichtung verzichtet werden.

Dies garantiert zum einen eine besonders hohe Benutzerfreundlichkeit der erfindungsgemäßen Vorrichtung und zum anderen niedrige Bereitstellungs- und Unterhaltungskosten.

Gleichzeitig zeichnet sich die Vorrichtung aufgrund der parallel geschalteten Behandlungsbecken durch ein besonders effizientes und konstantes Arbeiten aus.

Zudem bietet die aufgezeigte Vorrichtung eine besonders hohe Betriebssicherheit bei gleichzeitigem Schutz vor Fehlbedienungen.

Eine besonders vorteilhafte Weiterbildung der erfindungsgemäßen Vorrichtung zur Behandlung von Abwasser weist ferner ein Vorbehandlungsbecken auf, dem der Einlauf zugeordnet ist.

In das Vorbehandlungsbecken wird über den zugeordneten Einlauf zu behandelndes Abwasser eingebracht. Das Vorbehandlungsbecken ist vorliegend vorzugsweise als Belebungsbecken ausgebildet, in welchem das zu reinigende Abwasser gemäß dem Belebtschlammverfahren mit Mikroorganismen und Sauerstoff versetzt wird.

Gleichzeitig kann das Vorbehandlungsbecken als Speicherbecken zur Aufnahme und Pufferung einströmenden Abwassers genutzt werden.

Zudem weist diese Weiterbildung erfindungsgemäß eine erste und eine zweite Verbindungsöffnung auf, wobei das erste Behandlungsbecken über die erste Verbindungsöffnung mit dem Vorbehandlungsbecken und das zweite Behandlungsbecken über die zweite Verbindungsöffnung mit dem Vorbehandlungsbecken verbunden ist.

Die Verbindungsöffnungen können beispielsweise als eine oder mehrere Durchgangsöffnungen in einer Trennwand zwischen dem Vorbehandlungsbecken und dem jeweiligen Behandlungsbecken ausgebildet sein.

Die Verbindung der Behandlungsbecken mit dem Vorbehandlungsbecken erfolgt nach dem Prinzip der kommunizierenden Gefäße, vorzugsweise unterhalb des Wasserspiegels, wobei sich in allen Becken prinzipbedingt ein gleich hoher Wasserspiegel einstellt.

Die Behandlungsbecken sind gemäß der Weiterbildung parallel geschaltet, wobei das zu behandelnde Abwasser aus dem Vorbehandlungsbecken über die Verbindungsöffnungen alternativ in das erste oder in das zweite Behandlungsbecken einströmen kann.

Die erfindungsgemäße Vorrichtung weist weiterhin einen ersten und einen zweiten Ablauf auf, wobei der erste Ablauf dem ersten Behandlungsbecken und der zweite Ablauf dem zweiten Behandlungsbecken zugeordnet sind und wobei die Abläufe jeweils zum Abführen des gereinigten Abwassers, im Folgenden auch als Klarwasser bezeichnet, dienen. Zu diesem Zweck sind die Abläufe vorliegend unterhalb des sich einstellenden Wasserspiegels angeordnet.

Die parallele Anordnung der beiden Behandlungsbecken und deren Verbindung mit dem Vorbehandlungsbecken zu kommunizierenden Gefäßen ermöglicht auf besonders unkomplizierte Weise einen Betrieb der Vorrichtung derart, dass aus dem Vorbehandlungsbecken das vorbehandelte Abwasser, vorliegend als Abwasser-Belebtschlammgemisch, alternierend entweder in das erste Behandlungsbecken oder in das zweite Behandlungsbecken einstömt, wobei das Einströmen durch Öffnen oder Schließen des Ablaufs des jeweiligen Behandlungsbeckens geregelt wird, indem das mittels des Ablaufs ausgeleitete Volumenen nachströmen kann.

In jedem der Behandlungsbecken wird eine Füllphase, vorzugsweise ferner eine Reaktionsphase, eine Sedimentationsphase und abschießend eine Dekantierungsphase ausgeführt, welche zusammen einen Zyklus bilden. Der Zyklus wird in den beiden Behandlungsbecken dabei parallel durchgeführt, wobei die Phasenlage zeitlich versetzt ist. Während der Reaktionsphase und Sedimentionsphase in dem einen Behandlungsbecken, welches hierbei verschlossen ist, erfolgt die Füll- und Dekantierungsphase in dem anderen Behandlungsbecken, welches hierbei geöffnet ist. Der mit zwei Behandlungsbecken parallele, phasenversetzte zyklische Betrieb ermöglicht es, die Vorteile von SBR-Verfahren und Durchlaufverfahren zu vereinen.

In diesem Zusammenhang dient das Behandlungsbecken, dessen Ablauf während eines entsprechenden Betriebszustandes der Vorrichtung geschlossen ist, als Sedimentationsbecken, in welchem sich in einer Sedimenationsphase der Belebtschlamm aus dem vorbehandelten Abwasser absetzt und sich gleichzeitig im Bereich der Oberfläche das Klarwasser sammelt. Vorzugsweise erfolgt in diesem Behandlungsbecken vor der Sedimentation eine Abbau- und Reaktionsphase unter Durchführung einer Belüftung.

Zeitlich parallel strömt in das jeweils andere Behandlungsbecken, dessen Ablauf geöffnet ist, das vorbehandelte Abwasser aus dem Vorbehandlungsbecken ein und verdrängt in diesem das angesammelte Klarwasser, welches über den geöffneten Ablauf aus dem Behandlungsbecken abfließt. Die Durchsatzmenge und das Beckenvolumen sind dabei so abgestimmt, dass die für die Befüllung und den gleichzeitigen Klarwasserabzug benötigte Zeitdauer etwa der für die Reaktionsphase und Sedimentationsphase benötigten Zeitdauer entspricht.

Nach dem Abfließen des Klarwassers aus dem jeweils geöffneten Behandlungsbecken wird die Vorrichtung in einen weiteren Betriebszustand gebracht, in welchem der geschlossene Ablauf des bisher als Sedimentationsbecken genutzten Behandlungsbeckens geöffnet und das sich darin angesammelte Klarwasser, durch nachströmendes vorbehandelte Abwasser aus dem Vorbehandlungsbecken, über den geöffneten Ablauf verdrängt wird.

In diesem Betriebszustand dient nun das jeweils andere Behandlungsbecken, dessen Ablauf nun geschlossen ist, als Sedimentationsbecken.

In dem jeweils geschlossenen Behandlungsbecken können wahlweise weitere Behandlungsschritte durchgeführt werden, welche beispielsweise die Sedimentation positiv beeinflussen oder welche eine zumindest teilweise Rückführung des abgesetzten Belebtschlamms in das Vorbehandlungsbecken vorsehen. Zudem können in den Behandlungsbecken zusätzliche Beruhigungselemente vorgesehen sein, welche das einströmende, vorbehandelte Abwasser beruhigen und so die Sedimentation beschleunigen.

Der Abzug des Klarwassers aus dem jeweils zutreffenden Behandlungsbecken wird mittels der erfindungsgemäßen Regulierungseinheit gesteuert.

Die Anlage ermöglicht es, die Vorteile von SBR-Verfahren und Durchlaufverfahren zu vereinen. Im Vergleich zu derartigen Anlagen nach dem Stand der Technik werden die Vorteile der erfindungsgemäßen Lösung wie beispielsweise die hohe Betriebssicherheit, die Unanfälligkeit gegen Fehlbedienungen und die Kostenersparnis in besonderer Weise wirksam.

In einer besonders vorteilhaften Weiterbildung der Vorrichtung sind die Verschlussmittel der Regulierungseinheit als Kulissenelement ausgebildet.

Der Begriff Kulissenelement bezeichnet vorliegend eine Schieberbauform mit einem feststehenden Grundelement und einem auf diesem verschieblich gelagerten Schieberelement.

Das feststehende Grundelement wird in dem jeweiligen Ablauf fixiert und weist eine oder mehrere Durchgangsöffnungen mit speziell errechnetem Durchströmungsquerschnitt auf, durch welche das abzuführende Klarwasser hindurchströmen kann.

Das Schieberelement weist ebenfalls eine oder mehrere Durchgangsöffnungen auf und wird zum Öffnen oder Schließen des jeweiligen Ablaufs entweder horizontal oder vertikal gegenüber dem Grundelement verschoben.

Zum Öffnen des jeweiligen Ablaufs wird das Schieberelement des zugeordneten Kulissenschiebers soweit gegenüber dem Grundelement verschoben, dass die Durchgangsöffnungen des Schieberelements mit den Durchgangsöffnungen des Grundelements korrespondieren und so das Klarwasser durch die korrespondierenden Durchgangsöffnungen hindurchströmen und auf diese Weise aus dem entsprechenden Behandlungsbecken abfließen kann.

Zum Schließen des jeweiligen Ablaufs wird das Schieberelement des zugeordneten Kulissenschiebers soweit gegenüber dem Grundelement verschoben, dass sich die Durchgangsöffnungen nicht mehr überschneiden und so dass, in das jeweilige Behandlungsbecken nachströmende, vorbehandelte Abwasser nicht über den zugeordneten Ablauf abfließen kann.

Erfindungsgemäß sind die Schieberelemente der Verschlussmittel über das mechanische Verbindungsmittel mechanisch miteinander verbunden, wobei deren Öfnungs- oder Schließposition durch das Antriebsmittel festgelegt wird.

Alternativ können die Verschlussmittel auch als einfache, horizontal oder vertikal bewegliche Schieber ausgebildet sein, welche den jeweiligen Ablauf durch Einschieben oder Ausziehen verschließen, beziehungsweise öffnen.

Darüber hinaus können die Verschlussmittel auch als weitere, dem Fachmann bekannte Schiebersysteme, wie beispielsweise Drehschieber, ausgebildet sein.

Durch die hier aufgeführten Schiebersysteme wird eine besonders einfache und kostengünstige Lösung zur Regulierung des Klarwasserablaufs bereitgestellt.

Eine erfindungsgemäße Regulierungseinheit einer Vorrichtung zur Behandlung von Abwasser weist ein erstes Verschlussmittel und ein zweites Verschlussmittel sowie eine Antriebseinheit und ein mechanisches Verbindungsmittel auf.

Durch das mechanische Verbindungsmittel sind das erste Verschlussmittel und das zweite Verschlussmittel mechanisch derart miteinander verbunden, dass bei einer Öffnungsstellung des ersten Verschlussmittels das zweite Verschlussmittel eine Schließstellung einnimmt und umgekehrt.

Je nach Anwendungsfall kann hierbei das mechanische Verbindungsmittel beispielsweise als starres oder bewegliches Gestänge oder als Zahnstangengruppe ausgebildet sein.

Die Öffnungs- und Schließstellung beider Verschlussmittel ist erfindungsgemäß durch die Antriebseinheit festlegbar, wobei die Antriebseinheit beispielsweise als elektrischer Stellmotor vorliegt.

Die Verschlussmittel sind vorzugsweise als Schieber ausgebildet, wobei das erste Verschlussmittel einem ersten Ablauf eines ersten Behandlungsbeckens und das zweite Verschlussmittel einem zweiten Ablauf eines zweiten Behandlungsbeckens der Vorrichtung zu Behandlung von Abwasser zugeordnet sind.

Über die Abläufe wird in diesem Zusammenhang gereinigtes Abwasser als Klarwasser aus der Vorrichtung abgeleitet.

Eine erfindungsgemäße Regulierungseinheit ermöglicht auf besonders einfache Weise den Betrieb der Vorrichtung zur Behandlung von Abwasser derart, dass das Behandlungsbecken, dessen Ablauf geschlossen ist, als Sedimentationsbecken arbeitet, während gleichzeitig aus dem jeweils anderen Behandlungsbecken das sich bereits abgesetzte, gereinigte Abwasser als Klarwasser, über den zugeordneten, geöffneten Ablauf, abgeleitet werden kann.

Aufgrund des unkomplizierten Aufbaus weist die Regulierungseinheit in ihrer erfindungsgemäßen Ausbildung eine sehr geringe Störanfälligkeit durch etwaige Defekte sowie eine hohe Bediensicherheit auf. Gleichzeitig ist eine erfindungsgemäße Regulierungseinheit mit besonders niedrigen Porduktions- und Materialkosten bereitstellbar.

In einer besonders vorteilhaften Weiterbildung der Regulierungsvorrichtung sind die Verschlussmittel der Regulierungseinheit als Kulissenelement ausgebildet. Es wird auf die Beschreibung zu der entsprechenden Weiterbildung der Vorrichtung verwiesen.

Die Erfindung wird als Ausführungsbeispiel anhand von
- Fig. 1a: Prinzipdarstellung erster Ablauf geöffnet
- Fig. 1b: Prinzipdarstellung zweiter Ablauf geöffnet
- Fig. 2a: Prinzipdarstellung Kulissenelement geöffnet
- Fig. 2b: Prinzipdarstellung Kulissenelement geschlossen
näher erläutert.

In dem Ausführungsbeispiel weist die Vorrichtung zur Behandlung von Abwasser ein Vorbehandlungsbecken 1 auf, in welchen das zu behandelnde Abwasser über einen Einlauf 4 eingeleitet wird.

In dem Vorbehandlungsbecken 1 wird das zu behandelnde Abwasser mit Mikroorganismen und Sauerstoff versetzt, wobei die Mikroorganismen dem Abwasser vorzugsweise innerhalb von Belebtschlamm zugesetzt werden.

Das Vorbehandlungsbecken 1 übernimmt somit vorliegend die Funktion eines sogenannten Belebungsbeckens.

Gleichzeitig kann das Vorbehandlungsbecken 1 auch als Zwischenspeicher zur Pufferung des einströmenden Abwassers angewendet werden.

An das Vorbehandlungsbecken 1 schließen sich erfindungsgemäß ein erstes Behandlungsbecken 2 und ein zweites Behandlungsbecken 3 an, wobei die Behandlungsbecken 2 und 3 parallel geschaltet und über jeweils eine Verbindungsöffnung 5, 6 mit dem Vorbehandlungsbecken 1 verbunden sind.

Die Behandlungsbecken 2, 3 dienen insbesondere der Abwasserberuhigung und der Sedimentation, wobei sich der Belebtschlamm aus dem zu behandelnden Abwasser am Grund der Behandlungsbecken 2, 3 und das gereinigte Abwasser in Form von Klarwasser an der Oberfläche absetzen.

Die Verbindungsöffnungen 5, 6 sind unterhalb des sich einstellenden Wasserspiegels in dem Vorbehandlungsbecken 1 angeordnet, sodass das Vorbehandlungsbecken 1 und die Behandlungsbecken 2 und 3 als kommunizierende Gefäße mit jeweils gleichen Pegelständen vorliegen.

Die Behandlungsbecken 2 und 3 weisen ferner jeweils einen Ablauf 7, 8 auf, über welchen das Klarwasser aus den Behandlungsbecken 2, 3 abströmen kann.

Die vorliegende Lösung zeichnet sich erfindungsgemäß dadurch aus, dass die Vorrichtung eine Regulierungseinheit 9 aufweist, mittels derer der Klarwasserablauf aus den Behandlungsbecken 2, 3 regulierbar ist.

Die Regulierungseinheit 9 besteht im Wesentlichen aus einem ersten Verschlussmittel 10, einem zweiten Verschlussmittel 11, einer Antriebseinheit 12 sowie einem mechanischen Verbindungsmittel 13, wobei durch das mechanische Verbindungsmittel 13 die Verschlussmittel 10 und 11 mechanisch miteinander verbunden sind.

Erfindungsgemäß sind das erste Verschlussmittel 10 dem ersten Ablauf 7 und das zweite Verschlussmittel 11 dem zweiten Ablauf 8 zugeordnet.

Die Verbindung der Verschlussmittel 10 und 11 durch das mechanische Verbindungsmittel 13 ist erfindungsgemäß derart ausgeführt, dass bei einer Öffnungsstellung des ersten Verschlussmittels 10, das zweite Verschlussmittel 11 eine Schließstellung einnimmt und umgekehrt.

Unter einer Öffnungsstellung wird in diesem Zusammenhang verstanden, dass der zugeordnete Ablauf 7 oder 8, je nach Anforderung, teilweise oder vollständig geöffnet vorliegt und das Klarwasser durch diesen Ablauf 7 oder 8 aus dem jeweiligen Behandlungsbecken 2, 3 abströmen kann.

Die Schließstellung beschreibt im Gegensatz den Zustand des jeweiligen Verschlussmittels 10 oder 11, bei welchem der zugeordnet Ablauf 7 oder 8 vollständig verschlossen ist.

Die jeweilige Öffnungs- und Schließstellung der Verschlussmittel 10, 11 ist über die Antriebseinheit 12 festlegbar, wobei die Antriebseinheit 12 vorliegend mit dem mechanischen Verbindungsmittel 13 verbunden und als elektrischer Stellmotor ausgebildet ist.

Die Verschlussmittel 10, 11 sind in dem hier aufgezeigten Ausführungsbeispiel als Schieber ausgebildet, welche auf einem entsprechenden Führungselernent (nicht dargestellt) relativ zu den Abläufen 7, 8 verschiebbar sind.

Die erfindungsgemäß vorgesehene Regulierungseinheit 9 ermöglicht auf besonders vorteilhafte Art und Weise, dass die Vorrichtung derart betreibbar ist, dass jeweils ein Behandlungsbecken 2 oder 3 als Sedimentationsbecken zur Beruhigung des zu behandelnden Abwassers und zum Absetzen des Belebtschlamms genutzt werden kann, während dessen aus dem jeweils anderen Behandlungsbecken 2 oder 3 das abgesetzte Klarwasser abströmen kann.

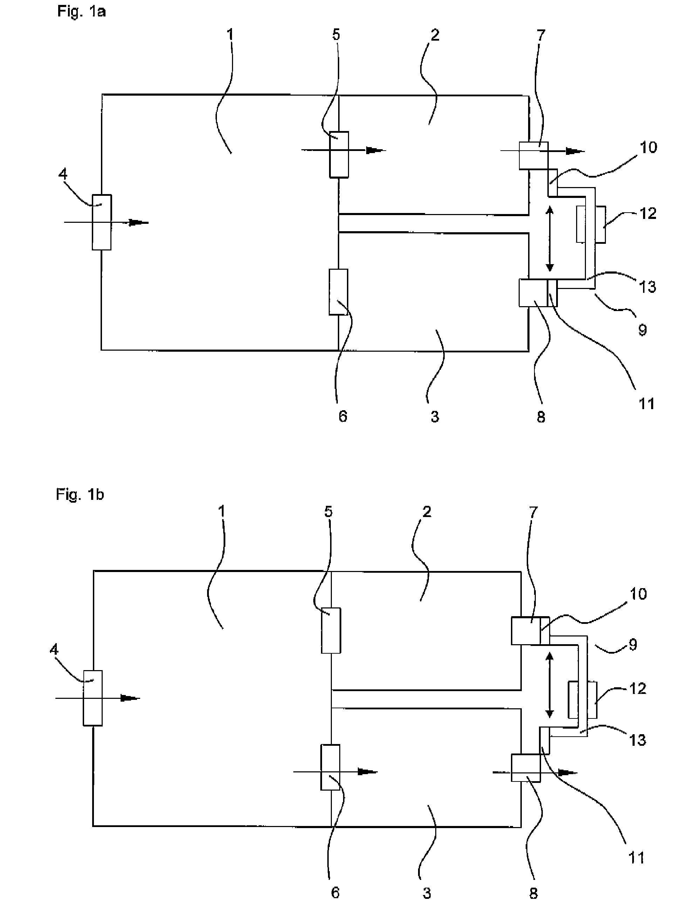

Fig. 1 zeigt vorliegend den Betriebszustand der Vorrichtung, bei welchem der erste Ablauf 7 geöffnet und gleichzeitig der zweite Ablauf 8 verschlossen ist.

In diesem Betriebszustand dient erfindungsgemäß das zweite Behandlungsbecken 3 als Sedimentationsbecken, in welches prinzipbedingt kein weiteres zu behandelndes Abwasser einströmen kann und in welchem somit eine Beruhigung des zu behandelnden Abwassers erfolgt und sich der Belebtschlamm am Grund des Behandlungsbeckens 3 absetzen kann.

Gleichzeitig setzt sich während der Sedimentation das gereinigte Abwasser als Klarwasser im Bereich oberhalb des abgesetzten Belebtschlamms ab.

Parallel zur Sedimentation in dem zweiten Behandlungsbecken 3 strömt über die erste Verbindungsöffnung 5 belebtes Abwasser aus dem Vorbehandlungsbecken 1 in das erste Behandlungsbecken 1 ein und verdrängt dort das sich an der Oberfläche abgesetzte Klarwasser, welches durch den geöffneten Ablauf 7 abströmen kann.

Nachdem die gewünschte Menge Klarwasser aus dem ersten Behandlungsbecken 2 abgeströmt ist, wird die Vorrichtung in einen weiteren Betriebszustand versetzt, indem der erste Ablauf 7 verschlossen und gleichzeitig der zweite Ablauf 8 geöffnet wird.

In diesem Betriebszustand dient nun das erste Behandlungsbecken 2 als Sedimentationsbecken, während in das zweite Behandlungsbecken 3 belebtes Abwasser aus dem Vorbehandlungsbecken 1 einströmt und in diesem das abgesetzte Klarwasser verdrängt, welches seinerseits über den nun geöffneten zweiten Ablauf 8 abströmt.

Zusätzlich kann in einem weiteren Betriebszustand sedimentierter Belebtschlamm aus dem jeweiligen Behandlungsbecken 2 oder 3 in das Vorbehandlungsbecken 1 zurückgeführt werden.

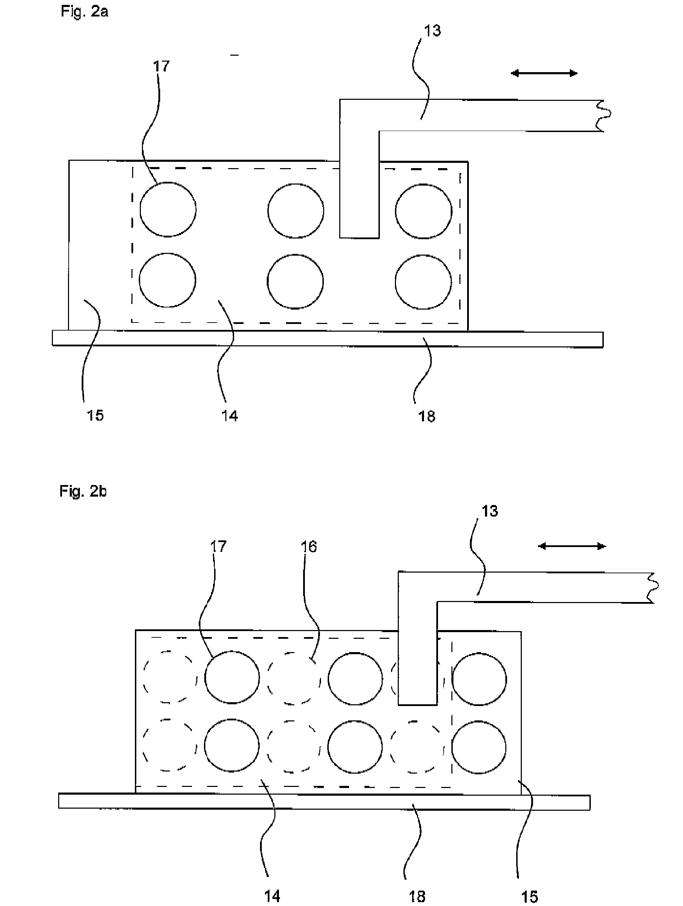

Die Fig. 2a und 2b zeigen ein Verschlusselement einer erfindungsgemäßen Regulierungseinheit, wobei das Verschlusselement als Kulissenschieber mit einem feststehenden Grundelement 14 (gestrichelt dargestellt) und einem, zu diesem relativ verschieblichen, Schieberelement 15 ausgebildet ist.

Das Schieberelement 15 ist auf einem Führungselement 18 verschieblich gelagert (Pfeil) und mit dem mechanischen Verbindungsmittel 13 verbunden. Demgegenüber ist das Grundelement dichtend in dem jeweiligen Ablauf der erfindungsgemäßen Vorrichtung zur Behandlung von Abwasser fixiert.

Im vorliegend dargestellten Ausführungsbeispiel weist das Grundelement 14 Durchgangsöffnungen 16 und das Schieberelement 15 Durchgangsöffnungen 17 auf. Die Durchgangsöffnungen des Schieberelements 15 sind hierbei so ausgebildet, dass diese mit den Durchgangsöffnungen 17 des Grundelelements 14 in eine korrespondierende Lage gebracht werden können.

Fig. 2a zeigt vorliegend eine Öffnungsstellung des Verschlussmittels, wobei das Schieberelement 15 gegenüber dem Grundelement 14 soweit verschoben ist, dass die Durchgangsöffnungen 17 des Schieberelements 15 mit den Durchgangsöffnungen 16 des Grundelements 14 korrespondieren.

In diesem Betriebszustand ist der zugehörige Ablauf des entsprechenden Behandlungsbeckens geöffnet, sodass das gereinigte Abwasser als Klarwasser aus dem Behandlungsbecken ausströmen kann.

Fig. 2b zeigt demgegenüber eine Schließstellung des Verschlussmittels, wobei die Durchgangsöffnungen 16 des Grundelements 14 vollständig durch das Schieberelement 15 abgedeckt und somit verschlossen sind.

In diesem Betriebszustand ist der zugehörige Ablauf der Vorrichtung verschlossen, sodass kein Klarwasserablauf möglich ist und das entsprechende Behandlungsbecken als Sedimentationsbecken wirken kann.

Die Erfindung wird in den nachstehenden Ansprüchen definiert.

### Verwendete Bezugszeichen

- 1: Vorbehandlungsbecken
- 2: erstes Behandlungsbecken
- 3: zweites Behandlungsbecken
- 4: Einlauf
- 5: erste Verbindungsöffnung
- 6: zweite Verbindungsöffnung
- 7: erster Ablauf
- 8: zweiter Ablauf
- 9: Regulierungseinheit
- 10: erstes Verschlussmittel
- 11: zweites Verschlussmittel
- 12: Antriebseinheit
- 13: mechanisches Verbindungsmittel
- 14: Grundelement
- 15: Schieberelement
- 16: Durchgangsöffnungen des Grundelements
- 17: Durchgangsöffnungen des Schieberelements
- 18: Führungselement

## Patentansprüche

1. Vorrichtung zur Behandlung von Abwasser, aufweisend ein erstes Behandlungsbecken (2), ein zweites Behandlungsbecken (3), einen Einlauf (4), einen ersten Zulauf (5) und einen zweiten Zulauf (6) sowie einen ersten Ablauf (7) und einen zweiten Ablauf (8), wobei der Einlauf (4) den Zuläufen der beiden Behandlungsbecken (2, 3) zugeordnet ist und wobei über den Einlauf (4) zu reinigendes Abwasser einbringbar ist, und wobei die beiden Behandlungsbecken (2;3) zu kommunizierenden Gefäßen verbunden ist, und wobei der erste Zulauf (5) und der erste Ablauf (7) dem ersten Behandlungsbecken (2) und der zweite Zulauf (6) und der zweite Ablauf (8) dem zweiten Behandlungsbecken (3) zugeordnet sind, wobei die Vorrichtung eine Regulierungseinheit (9) aufweist, wobei die Regulierungseinheit (9) ein erstes Verschlussmittel (10), ein zweites Verschlussmittel (11), eine Antriebseinheit (12) sowie ein mechanisches Verbindungsmittel (13) aufweist, wobei mittels des mechanischen Verbindungsmittels (13) das erste Verschlussmittel (10) und das zweite Verschlussmittel (11) mechanisch miteinander verbunden sind, und wobei das erste Verschlussmittel (10) dem ersten Ablauf (7) und das zweite Verschlussmittel (11) dem zweiten Ablauf (8) zugeordnet sind, und dass bei einer Öffnungsstellung des ersten Verschlussmittels (10) das zweite Verschlussmittel (11) eine Schließstellung einnimmt und umgekehrt, und dass die Öffnungsstellung und die Schließstellung beider Verschlussmittel (10, 11) durch die Antriebseinheit (12) festlegbar ist.

2. Vorrichtung zur Behandlung von Abwasser nach Anspruch 1,
wobei die Vorichtung ein Vorbehandlungsbecken (1) aufweist, wobei der erste Zulauf als eine erste Verbindungsöffnung (5) und der zweite Zulauf als eine zweite Verbindungsöffnung (6) ausgebildet ist, wobei der Einlauf (4) dem Vorbehandlungsbecken (1) zugeordnet ist und wobei über den Einlauf (4) zu reinigendes Abwasser in das Vorbehandlungsbecken (1) einbringbar ist, und wobei das Vorbehandlungsbecken (1) über die erste Verbindungsöffnung (5) mit dem ersten Behandlungsbecken (2) und über die zweite Verbindungsöffnung (6) mit dem zweiten Behandlungsbecken (3) zu kommunizierenden Gefäßen verbunden ist, und wobei das erste Behandlungsbecken (2) und das zweite Behandlungsbecken (3) parallel geschaltet sind.

3. Vorrichtung nach Anspruch 1,
wobei die Verschlussmittel (10, 11) als Schieber, insbesondere als Kulissenelement ausgebildet sind.

## Claims

1. A system for treating wastewater, comprising a first treatment basin (2), a second treatment basin (3), an inlet (4), a first supply (5) and a second supply (6) as well as a first discharge (7) and a second discharge (8), wherein the inlet (4) is assigned to the supplies of the two treatment basins (2, 3) and wherein wastewater to be purified can be supplied via the inlet (4), and wherein the two treatment basins (2, 3) are connected to communicating vessels, and wherein the first supply (5) and the first discharge (7) are assigned to the first treatment basin (2) and the second supply (6) and the second discharge (8) are assigned to the second treatment basin (3),
wherein the system comprises a control unit (9), wherein the control unit (9) comprises a first closing element (10), a second closing element (11), a drive unit (12) and a mechanical connection element (13), wherein the first closing element (10) and the second closing element 11) are mechanically connected to each other by means of the mechanical connection element (13), and wherein the first closing element (10) is assigned to the first discharge (7) and the second closing element (11) is assigned to the second discharge (8), and that the second closing element (11) takes a closed position in an open position of the first closing element (10), and vice versa, and that the open position and the closed position of both closing elements (10, 11) can be set by the drive unit (12).

2. The system for treating wastewater according to claim 1,
wherein the system comprises a pretreatment basin (1), wherein the first supply is designed as a first connection opening (5) and the second -supply as a second connection opening (6), wherein the inlet (4) is assigned to the pretreatment basin (1) and wherein wastewater to be purified can be supplied via the inlet (4) into the pretreatment basin (1), and wherein the pretreatment basin (1) is connected to communicating vessels, to the first treatment basin (2) via the first connection opening (5) and to the second treatment basin (3) via the second connection opening (6), and wherein the first treatment basin (2) and the second treatment basin (3) are connected in parallel.

3. The system according to claim 1,
wherein the closing elements (10, 11) are designed as a slider, in particular as a crank-type slider.

## Revendications

1. Dispositif pour le traitement d'eaux usées, comportant un premier bassin de traitement (2), un deuxième bassin der traitement (3), une alimentation (4), une première entrée (5) et une deuxième entrée (6) ainsi qu'une première évacuation (7) et une deuxième évacuation (8), l'alimentation (4) étant assignée aux entrées des deux bassins de traitement (2, 3) et des eaux usées à purifier pouvant être fournies par l'alimentation (4) et les deux bassins de traitement (2;3) étant reliés pour former des réservoirs à communiquer, et la première entrée (5) et la première évacuation (7) étant assignées au premier bassin de traitement (2) et la deuxième entrée (6) et la deuxième évacuation (8) étant assignées au deuxième bassin de traitement (3),
le dispositif présentant une unité de régulation (9), cette unité de régulation (9) comportant une premier moyen d'obturation (10), un deuxième moyen d'obturation (11), une unité d'entraînement (12) ainsi qu'un organe de liaison mécanique (13), cet organe de liaison mécanique (13) étant utiliser pour relier le premier moyen d'obturation (10) et le deuxième moyen d'obturation (11) de façon mécanique, et le premier moyen d'obturation (10) étant assigné au première évacuation (7) et le deuxième moyen d'obturation (11) à la deuxième évacuation (8), et que, lors d'une position d'ouverture du premier moyen d'obturation(10), le deuxième moyen d'obturation (11) prend une position fermée et vice versa, et que la position ouverte et la position fermée des deux moyens d'obturation (10, 11) peuvent être déterminées par l'unité d'entraînement (12).

2. Dispositif pour le traitement d'eaux usées suivant la revendication 1,
le dispositif présentant un bassin de traitement préalable (1), la première entrée étant formée comme un premier orifice de jonction (5) et la deuxième entrée comme un deuxième orifice de jonction (6), l'alimentation (4) étant assignée au bassin de traitement préalable (1) et des eaux usées à purifier pouvant être fournies par l'alimentation (4) dans le bassin de traitement préalable (1), et le bassin de traitement préalable (1) étant relié par le premier orifice de jonction (5) au premier bassin de traitement (2) et par le deuxième orifice de jonction (6) au deuxième bassin de traitement (3) pour former des réservoirs à communiquer et le premier bassin de traitement (2) et le deuxième bassin de traitement (3) étant couplés en parallèle.

3. Dispositif suivant la revendication 1,
le moyen d'obturation (10, 11) se présentant comme curseur, en particulier comme élément coulissant.
